# EUROPEAN PATENT APPLICATION

(11) **EP 3 032 617 A1**
(43) Date of publication of application: **15.06.2016**
(21) Application number: 14834535.8
(22) Date of filing: 30.07.2014
(51) Int. Cl.: H01M 4/485, H01M 10/054

(54) **NEGATIVE-ELECTRODE ACTIVE MATERIAL FOR SODIUM-ION BATTERY, AND SODIUM-ION BATTERY**

(30) Priority: 07.08.2013 JP 2013163919
(71) Applicant: TOYOTA JIDOSHA KABUSHIKI KAISHA, Toyota-shi, Aichi-ken 471-8571 (JP)
(72) Inventor: NAKAYAMA, Hideki, Toyota-shi Aichi 471-8571 (JP); YOSHIDA, Jun, Toyota-shi Aichi 471-8571 (JP)
(74) Representative: Intès, Didier Gérard André
(86) International application number: PCT/JP2014/070078
(87) International publication number: WO 2015/019922

(57) **Abstract**

The problem of the present invention is to provide an anode active material for a sodium ion battery, which may intend to improve safety of the battery. The present invention solves the problem by providing an anode active material for a sodium ion battery comprising an MNb₃O₈ phase (M is at least one kind of H, Li, Na and K) belonging to an orthorhombic crystal.

## Description

### Technical Field

The present invention relates to an anode active material for a sodium ion battery, which intends to improve safety of the battery.

### Background Art

A sodium ion battery is a battery such that an Na ion moves between a cathode and an anode. Na exists so abundantly as compared with Li that the sodium ion battery has the advantage that lower costs are easily intended as compared with a lithium ion battery. Generally, the sodium ion battery has a cathode active material layer containing a cathode active material, an anode active material layer containing an anode active material, and an electrolyte layer formed between the cathode active material layer and the anode active material layer.

An anode active material used for the sodium ion battery is actively researched. For example, in Patent Literature 1, it is described that hard carbon is used as an anode active material for the sodium ion secondary battery. On the other hand, an Nb oxide is known as an active material for insertion and desorption of an Li ion, not an Na ion. For example, in Non Patent Literature 1, it is described that KNb₅O₁₃ inserts and desorbs an Li ion. Also, in Non Patent Literature 2, it is described that LiNb₃O₈ inserts and desorbs an Li ion. Incidentally, in Non Patent Literature 3, a crystal structure of KNb₃O₈ is disclosed but the use of it for an active material is not disclosed at all.

### Citation List

### Patent Literature

Patent Literature 1: WO 2010/109889 A

### Non Patent Literature

Non Patent Literature 1: Yuhao Lu et al., "Behavior of Li Guest in KNb5O13 Host with One-Dimensional Tunnels and Multiple Interstitial Sites", Chem. Mater. 2011, 23, 3210-3216
Non Patent Literature 2: M. Anji Reddy et al., "Lithium Insertion into Niobates with Columbite-Type Structure: Interplay between Structure-Composition and Crystallite Size", J. Phys. Chem. C 2011, 115, 25121-25124
Non Patent Literature 3: Par Madeleine Gasperin, "Structure du Triniobate(V) de Potassium KNb3O8, un Niobate Lamellaire", Acta Cryst. (1982). B38, 2024-2026

### Summary of Invention

### Technical Problem

For example, in the case where hard carbon described in Patent Literature 1 is used as an anode active material of the sodium ion battery, the problem is that hard carbon is so low in action potential as an active material that metal Na is easily precipitated. Thus, safety of the battery deteriorates.

The present invention has been made in view of the actual circumstances, and the main object thereof is to provide an anode active material for a sodium ion battery, which may intend to improve safety of the battery.

### Solution to Problem

In order to solve the problems, the present invention provides an anode active material for a sodium ion battery comprising an MNb₃O₈ phase (M is at least one kind of H, Li, Na and K) belonging to an orthorhombic crystal.

According to the present invention, the MNb₃O₈ phase acts stably at comparatively high electric potential, so that an improvement in safety of the battery can be intended.

In the invention, a part of Nb in the MNb₃O₈ phase is preferably substituted with another metallic element Me.

In the invention, valence number of the metallic element Me is preferably divalence, trivalence or tetravalence.

In the invention, it is preferable that the metallic element Me is Ti and "x" in M(Nb₃₋ₓTiₓ)O₈ satisfies 0.005 ≦ x ≦ 0.02.

In the invention, the M preferably has at least one kind of H, Li and Na.

Also, the present invention provides a sodium ion battery comprising a cathode active material layer containing a cathode active material, an anode active material layer containing an anode active material and an electrolyte layer formed between the cathode active material layer and the anode active material layer, characterized in that the anode active material is the anode active material for a sodium ion battery described above.

According to the present invention, the use of the anode active material for a sodium ion battery described above allows the sodium ion battery with high safety. Advantageous Effects of Invention

An anode active material for a sodium ion battery of the present invention produces the effect such as to allow an improvement in safety of the battery.

### Brief Description of Drawings

FIG. 1 is a schematic cross-sectional view showing an example of a sodium ion battery of the present invention.
FIG. 2 is a result of measuring XRD of an active material obtained in Example 1.
FIG. 3 is a schematic view showing a crystal structure of a KNb₃O₈ phase (orthorhombic crystal, space group Amam).
FIG. 4 is a result of a charge and discharge test of an evaluation battery (a sodium ion battery) using an active material obtained in Example 1.
FIG. 5 is a result of a charge and discharge test of an evaluation battery (a lithium ion battery) using an active material obtained in Example 1.
FIG. 6 is a result of measuring XRD for an active material obtained in Examples 1 to 7.
FIG. 7 is a result of charge and discharge efficiency of an evaluation battery (a sodium ion battery) using an active material obtained in Examples 1 to 7.
FIG. 8 is a result of rate characteristics of an evaluation battery (a sodium ion battery) using an active material obtained in Examples 1 to 7.
FIG. 9 is a result of measuring XRD of an active material obtained in Example 8.
FIG. 10 is a result of measuring XRD of an active material obtained in Comparative Example 1.
FIG. 11 is a schematic view showing a crystal structure of an LiNb₃O₈ phase (monoclinic crystal, space group P21/a).
FIGS. 12A to 12E are each a result of a charge and discharge test of an evaluation battery (a sodium ion battery) using an active material obtained in Examples 8 to 11 and Comparative Example 1.

### Description of Embodiments

An anode active material for a sodium ion battery and a sodium ion battery of the present invention are hereinafter described in detail.

### A. Anode active material for sodium ion battery

First, an anode active material for a sodium ion battery of the present invention is described. The anode active material for a sodium ion battery of the present invention comprises an MNb₃O₈ phase (M is at least one kind of H, Li, Na and K) belonging to an orthorhombic crystal.

According to the present invention, the MNb₃O₈ phase acts stably at comparatively high electric potential, so that an improvement in safety of the battery can be intended. In the after-mentioned examples, it was confirmed that action potential of the anode active material comprising a KNb₃O₈ phase was in the vicinity of 1 V (vs Na/Na⁺). The action potential in the vicinity of 1 V is such a moderate electric potential as the anode active material as to have the advantage that battery voltage may be increased while restraining metal Na from precipitating. Also, the anode active material for a sodium ion battery of the present invention has the advantage that heat resistance is favorable by reason of being ordinarily an oxide active material.

On the other hand, a crystal structure of KNb₅O₁₃ described in Non Patent Literature 1 differs greatly from a crystal structure of the MNb₃O₈ phase in the present invention. Similarly, a crystal structure of LiNb₃O₈ described in Non Patent Literature 2 differs greatly from a crystal structure of the MNb₃O₈ phase in the present invention. In recent years, research and development of a sodium ion battery have been actively conducted, and various materials have been proposed for a cathode active material; however, hard carbon, titanium oxides and organic materials have been reported at most for an anode active material. In the present invention, it has been first found out that an oxide with Nb, that is, the MNb₃O₈ phase is useful as the anode active material for a sodium ion battery.

The anode active material for a sodium ion battery of the present invention comprises an MNb₃O₈ phase (M is at least one kind of H, Li, Na and K) belonging to an orthorhombic crystal. Incidentally, the presence of the MNb₃O₈ phase may be confirmed by X-ray diffraction (XRD) measurement and the like. With regard to the MNb₃O₈ phase, in X-ray diffraction measurement using a CuKα ray, typical peaks ordinarily appear in 2θ = 8.35°, 12.99°, 16.75°, 19.50°, 23.78°, 26.14°, 26.63°, 28.48°, 31.21°, 31.62°, 32.22°, and 33.86°. Incidentally, these peak positions are strictly peak positions of a KNb₃O₈ phase, and have a possibility of shifting somewhat in accordance with kinds of M. Thus, the peak positions may be within a range of ± 2.00° or within a range of ± 1.00°. Also, examples of a space group of the MNb₃O₈ phase include Amam.

Also, the anode active material for a sodium ion battery of the present invention is preferably large in the ratio of the MNb₃O₈ phase; specifically, the anode active material preferably contains the MNb₃O₈ phase mainly. Here, 'containing the MNb₃O₈ phase mainly' signifies that the ratio of the MNb₃O₈ phase is the largest in all crystal phases contained in the anode active material. The ratio of the MNb₃O₈ phase contained in the anode active material is preferably 50 mol% or more, more preferably 60 mol% or more, and far more preferably 70 mol% or more. Also, the anode active material for a sodium ion battery of the present invention may be such as to comprise only the MNb₃O₈ phase (a single-phase active material). Incidentally, the ratio of the MNb₃O₈ phase contained in the anode active material may be determined by a quantitative analysis method through X-ray diffraction (such as a quantification method by R-value and a Rietveld method).

In the present invention, a part of Nb in the MNb₃O₈ phase may be substituted with another metallic element Me. This case may be represented as an M(Nb₃₋ₓMeₓ)O₈ phase (0 < x < 3). The substitution of part of Nb with another metallic element Me improves electron conduction. The valence number of another metallic element Me is not particularly limited but examples thereof include divalence to pentavalence (divalence, trivalence, tetravalence and pentavalence); above all, divalence to tetravalence are preferable. The reason therefor is that the valence number of Nb in the MNb₃O₈ phase is pentavalence, so that the substitution with a metallic element except pentavalence improves electron conduction further. As a result, at least one of charge and discharge efficiency and rate characteristics is improved. In particular, the improvement of electron conduction has a great influence on the improvement of rate characteristics. The reason why the substitution of Nb (pentavalence) with Me different in valence number improves electron conduction is guessed to be that Me works like a dopant in a semiconductor to smoothen electron transfer.

Examples of another metallic element Me include a transition metallic element, and include Ti, Sc, Zr, Y, La, V, Cr, Mn, Fe, Zr, Mo, Ta and W, above all. Also, in the case where a state such that a part of Nb in the MNb₃O₈ phase is substituted with another metallic element Me is regarded as M(Nb₃₋ₓMeₓ)O₈, the value of "x" is preferably a value at which an impurity peak (such as another crystal phase containing Me) is not observed in XRD measurement. The reason therefor is that at least one of electron conductance and ion conductance may be restrained from deteriorating. For example, in the case where Me is Ti element, the value of "x" is preferably adjusted so that peaks such as KTiNbO₅, Ti₂Nb₆O₁₂ and TiO₂ are not observed in XRD measurement.

The value "x" ordinarily satisfies 0 < x and preferably satisfies 0.001 ≦ x, more preferably 0.003 ≦ x, far more preferably 0.005 ≦ x. On the other hand, for example, "x" satisfies x ≦ 0.3 and preferably satisfies x ≦ 0.1. Also, in particular, in the case where Me is Ti, "x" preferably satisfies 0.005 ≦ x ≦ 0.02. The reason therefor is that an improvement in charge and discharge efficiency and rate characteristics may be intended. Incidentally, the substitution rate of Nb with Me may be represented as x/3, and a preferable range of the substitution rate may be obtained by multiplying the range of "x" by one-third times.

In the present invention, M in the MNb₃O₈ phase is ordinarily at least one kind of H, Li, Na and K. M may be any one kind of H, Li, Na and K, or two kinds or more thereof. Above all, M preferably has at least one kind of H, Li and Na. The reason therefor is that an improvement in capacity may be intended as compared with the case where M is only K. Also, the anode active material for a sodium ion battery of the present invention may be such that part or all of K in the KNb₃O₈ phase is substituted with another element A (A is at least one kind of H, Li and Na). Also, a part of Nb in the KNb₃O₈ phase may be substituted with another metallic element Me. This case may be represented as an K_{1-y}A_{y}(Nb₃₋ₓMeₓ)O₈ phase (0 ≦ x < 3, 0 ≦ y ≦ 1). Examples of a method for producing an active material in which K in the KNb₃O₈ phase is substituted with another element A include an ion exchange method for ion-exchanging K in the KNb₃O₈ phase with another element A. Examples of another producing method include a solid-phase method.

Also, the anode active material for a sodium ion battery of the present invention contains a M element, a Nb element and an O element, and has the MNb₃O₈ phase described above. In addition, the anode active material may contain the Me element described above. The composition of the anode active material for a sodium ion battery of the present invention is not particularly limited if the composition has the crystal phase described above. Above all, the anode active material for a sodium ion battery of the present invention preferably has a composition of an M(Nb₃₋ₓMeₓ)O₈ (0 ≦ x < 3) . Me and "x" are the same as the contents described above.

The shape of the anode active material for a sodium ion battery of the present invention is preferably a particulate shape, for example. Also, the average particle diameter thereof (D₅₀) is preferably, for example within a range of 1 nm to 100 µm, above all within a range of 10 nm to 30 µm.

Also, a method for producing the anode active material for a sodium ion battery of the present invention is not particularly limited if the method is such as to allow the active material described above, but examples thereof include a solid-phase method, a sol-gel method, a spray-drying method, an atomized pyrolysis method, a hydrothermal method and a coprecipitation method.

### B. Sodium ion battery

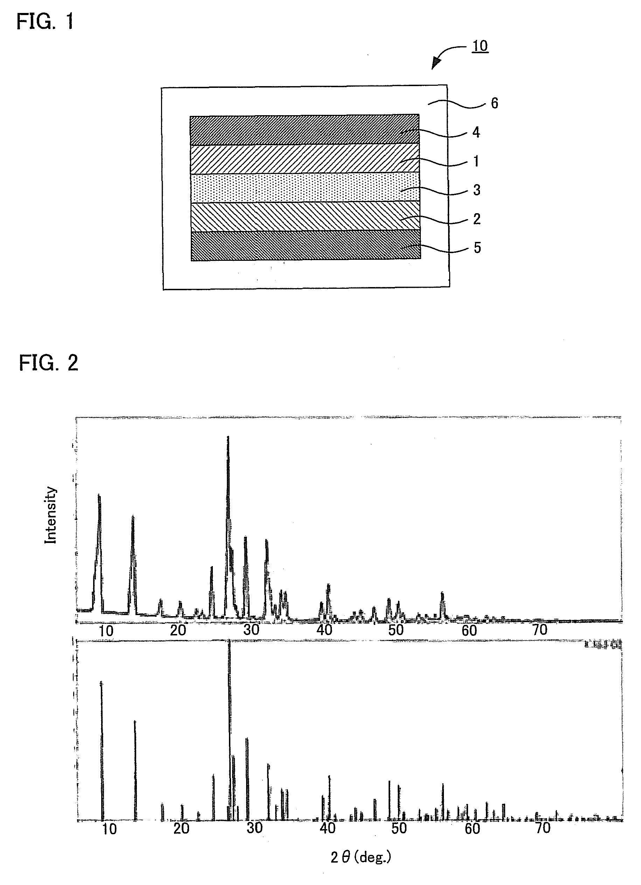

FIG. 1 is a schematic cross-sectional view showing an example of a sodium ion battery of the present invention. A sodium ion battery 10 shown in FIG. 1 comprises a cathode active material layer 1, an anode active material layer 2, an electrolyte layer 3 formed between the cathode active material layer 1 and the anode active material layer 2, a cathode current collector 4 for collecting the cathode active material layer 1, an anode current collector 5 for collecting the anode active material layer 2, and a battery case 6 for storing these members. Also, the anode active material layer 2 contains the anode active material described in the 'A. Anode active material for sodium ion battery'.

According to the present invention, the use of the anode active material for a sodium ion battery described above allows the sodium ion battery with high safety.

The sodium ion battery of the present invention is hereinafter described in each constitution.

### 1. Anode active material layer

First, the anode active material layer in the present invention is described. The anode active material layer in the present invention is a layer containing at least the anode active material. Also, the anode active material layer may contain at least one of a conductive material, a binder and a solid electrolyte material in addition to the anode active material.

The anode active material in the present invention is ordinarily the anode active material described in the 'A. Anode active material for sodium ion battery'.

The conductive material is not particularly limited if the conductive material is such as to have desired electron conduction, but examples thereof include a carbon material and a metallic material, preferably a carbon material among them. Specific examples of the carbon material include carbon black such as acetylene black, Ketjen Black, furnace black and thermal black; carbon fiber such as VGCF; carbon nanotube; graphite; hard carbon; and coke. Examples of the metallic material include Fe, Cu, Ni and Al.

The binder is not particularly limited if the binder is such as to be stable chemically and electrically, but examples thereof include fluorine-based binders such as polyvinylidene fluoride (PVDF) and polytetrafluoroethylene (PTFE), rubber-based binders such as styrene-butadiene rubber, imide-based binders such as polyimide, olefin-based binders such as polypropylene (PP) and polyethylene (PE), and cellulose-based binders such as carboxymethyl cellulose (CMC). Also, the solid electrolyte material is not particularly limited if the material is such as to have desired ion conductivity, but examples thereof include an oxide based solid electrolyte material and a sulfide solid electrolyte material. Incidentally, the solid electrolyte material is described in detail in the after-mentioned '3. Electrolyte layer'.

The content of the anode active material in the anode active material layer is preferably larger from the viewpoint of capacity; preferably, for example within a range of 60% by weight to 99% by weight, above all within a range of 70% by weight to 95% by weight. Also, the content of the conductive material is preferably smaller if the material may secure desired electron conduction; preferably, for example within a range of 5% by weight to 80% by weight, above all within a range of 10% by weight to 40% by weight. The reason therefor is that too small content of the conductive material brings a possibility of not allowing sufficient electron conduction, whereas too large content of the conductive material brings a possibility of relatively decreasing the amount of the active material to reduce the capacity. Also, the content of the binder is preferably smaller if the binder may stably fix the anode active material; preferably, for example within a range of 1% by weight to 40% by weight. The reason therefor is that too small content of the binder brings a possibility of not allowing sufficient binding property, whereas too large content of the binder brings a possibility of relatively decreasing the amount of the active material to reduce the capacity. Also, the content of the solid electrolyte material is preferably smaller if the material may secure desired ion conductivity; preferably, for example within a range of 1% by weight to 40% by weight. The reason therefor is that too small content of the solid electrolyte material brings a possibility of not allowing sufficient ion conductivity, whereas too large content of the solid electrolyte material brings a possibility of relatively decreasing the amount of the active material to reduce the capacity.

Also, the thickness of the anode active material layer varies greatly with the constitution of the battery, and is preferably within a range of 0.1 µm to 1000 µm, for example.

### 2. Cathode active material layer

Next, the cathode active material layer in the present invention is described. The cathode active material layer in the present invention is a layer containing at least the cathode active material. Also, the cathode active material layer may contain at least one of a conductive material, a binder and a solid electrolyte material in addition to the cathode active material.

Examples of the cathode active material include bed type active materials, spinel type active materials, and olivine type active materials. Specific examples of the cathode active material include NaFeO₂, NaNiO₂, NaCoO₂, NaMnO₂, NaVO₂, Na(Ni_{X}Mn_{1-X})O₂ (0 < X < 1), Na(Fe_{X}Mn_{1-X})O₂ (0 < X < 1), NaVPO₄F, Na₂FePO₄F, Na₃V₂(PO₄)₃, and Na₄M₃(PO₄)2P₂O₇ (M is at least one kind of Co, Ni, Fe and Mn).

The shape of the cathode active material is preferably a particulate shape. Also, the average particle diameter of the cathode active material (D₅₀) is preferably, for example within a range of 1 nm to 100 µm, above all within a range of 10 nm to 30 µm. The content of the cathode active material in the cathode active material layer is preferably larger from the viewpoint of capacity; preferably, for example within a range of 60% by weight to 99% by weight, above all within a range of 70% by weight to 95% by weight. Incidentally, the kinds and content of the conductive material, the binder and the solid electrolyte material used for the cathode active material layer are the same as the contents described in the anode active material layer described above; therefore, the description herein is omitted. Also, the thickness of the cathode active material layer varies greatly with the constitution of the battery, and is preferably within a range of 0.1 µm to 1000 µm, for example.

### 3. Electrolyte layer

Next, the electrolyte layer in the present invention is described. The electrolyte layer in the present invention is a layer formed between the cathode active material layer and the anode active material layer. Ion conduction between the cathode active material and the anode active material is performed through the electrolyte contained in the electrolyte layer. The form of the electrolyte layer is not particularly limited but examples thereof include a liquid electrolyte layer, a gel electrolyte layer and a solid electrolyte layer.

The liquid electrolyte layer is ordinarily a layer obtained by using a nonaqueous liquid electrolyte. The nonaqueous liquid electrolyte ordinarily contains a sodium salt and a nonaqueous solvent. Examples of the sodium salt include inorganic sodium salts such as NaPF₆, NaBF₄, NaClO₄ and NaAsF₆; and organic sodium salts such as NaCF₃SO₃, NaN (CF₃SO₂)₂, NaN (C₂F₅SO₂)₂, NaN(FSO₂)₂ and NaC(CF₃SO₂)₃.

The nonaqueous solvent is not particularly limited if the solvent is such as to dissolve the sodium salt. Examples of the high permittivity solvent include cyclic ester (cyclic carbonate) such as ethylene carbonate (EC), propylene carbonate (PC) and butylene carbonate (BC), γ-butyrolactone, sulfolane, N-methylpyrrolidone (NMP), and 1,3-dimethyl-2-imidazolidinone (DMI). On the other hand, examples of the low-viscosity solvent include chain ester (chain carbonate) such as dimethyl carbonate (DMC), diethyl carbonate (DEC) and ethyl methyl carbonate (EMC), acetate such as methyl acetate and ethyl acetate, and ester such as 2-methyltetrahydrofuran. A mixed solvent such that the high permittivity solvent and the low-viscosity solvent are mixed may be used.

The concentration of the sodium salt in the nonaqueous liquid electrolyte is, for example, within a range of 0.3 mol/L to 5 mol/L, preferably within a range of 0.8 mol/L to 1.5 mol/L. The reason therefor is that too low concentration of the sodium salt brings a possibility of causing capacity reduction during high rate, whereas too high concentration of the sodium salt brings a possibility of increasing viscosity to cause capacity reduction at low temperature. Incidentally, a low-volatile liquid such as an ionic liquid may be used as the nonaqueous liquid electrolyte.

The gel electrolyte layer may be obtained by adding and gelating a polymer to a nonaqueous liquid electrolyte, for example. Specifically, gelation may be performed by adding polymers such as polyethylene oxide (PEO), polyacrylonitrile (PAN) or polymethyl methacrylate (PMMA) to a nonaqueous liquid electrolyte.

The solid electrolyte layer is a layer obtained by using the solid electrolyte material. The solid electrolyte material is not particularly limited if the material is such as to have Na ion conductivity, but examples thereof include an oxide based solid electrolyte material and a sulfide solid electrolyte material. Examples of the oxide based solid electrolyte material include Na₃Zr₂Si₂PO₁₂ and β alumina solid electrolyte (such as Na₂O-11Al₂O₃). Examples of the sulfide solid electrolyte material include Na₂S-P₂S₅.

The solid electrolyte material may be amorphous or crystalline. Also, the shape of the solid electrolyte material is preferably a particulate shape. Also, the average particle diameter of the solid electrolyte material (D₅₀) is preferably, for example within a range of 1 nm to 100 µm, above all within a range of 10 nm to 30 µm.

The thickness of the electrolyte layer varies greatly with kinds of the electrolyte and constitutions of the battery, and is preferably, for example within a range of 0.1 µm to 1000 µm, above all within a range of 0.1 µm to 300 µm.

### 4. Other constitutions

The sodium ion battery of the present invention comprises at least the anode active material layer, cathode active material layer and electrolyte layer described above, ordinarily further comprising a cathode current collector for collecting the cathode active material layer and an anode current collector for collecting the anode active material layer. Examples of a material for the cathode current collector include SUS, aluminum, nickel, iron, titanium and carbon. On the other hand, examples of a material for the anode current collector include SUS, copper, nickel and carbon. Also, examples of the shape of the current collectors include a foil shape, a mesh shape and a porous shape. Also, a method for forming the active material layers on the current collectors is not particularly limited but examples thereof include a doctor blade method, an electrostatic coating method, a dip coat method and a spray coat method.

The sodium ion battery of the present invention may have a separator between the cathode active material layer and the anode active material layer. The reason therefor is to allow the battery with higher safety. A material for the separator may be an organic material or an inorganic material. Specific examples thereof include porous membranes such as polyethylene (PE), polypropylene (PP), cellulose and polyvinylidene fluoride; and nonwoven fabrics such as resin nonwoven fabric and glass fiber nonwoven fabric. Also, the separator may be a single-layer structure (such as PE and PP) or a laminated structure (such as PP/PE/PP). Also, a battery case of a general battery may be used for a battery case. Examples of the battery case include a battery case made of SUS.

### 5. Sodium ion battery

The sodium ion battery of the present invention is not particularly limited if the battery is such as to comprise the cathode active material layer, anode active material layer and electrolyte layer described above. Also, the sodium ion battery of the present invention may be a battery in which the electrolyte layer is the solid electrolyte layer, a battery in which the electrolyte layer is the liquid electrolyte layer, or a battery in which the electrolyte layer is the gel electrolyte layer. In addition, the sodium ion battery of the present invention may be a primary battery or a secondary battery, preferably a secondary battery among them. The reason therefor is to be repeatedly charged and discharged and be useful as a car-mounted battery, for example. Also, examples of the shape of the sodium ion battery of the present invention include a coin shape, a laminate shape, a cylindrical shape and a rectangular shape. Also, a producing method for the sodium ion battery is not particularly limited but is the same as a producing method for a general sodium ion battery.

Incidentally, the present invention is not limited to the embodiments. The embodiments are exemplification, and any is included in the technical scope of the present invention if it has substantially the same constitution as the technical idea described in the claim of the present invention and offers similar operation and effect thereto.

### Examples

The present invention is described more specifically while showing examples hereinafter.

### [Example 1]

Weighed as raw materials were K₂CO₃ and Nb₂O₅ at a molar ratio of K₂CO₃ : Nb₂O₅ = 1 : 3, and kneaded in ethanol. Thereafter, the solution was molded into pellets, which were burned in a muffle furnace on the conditions of 800°C and 40 hours. Thereafter, the pellets were further ground and molded, and burned again in a muffle furnace on the conditions of 800°C and 40 hours. Thus, an active material having a composition of KNb₃O₈ was obtained.

### [Evaluations]

### (X-ray diffraction measurement)

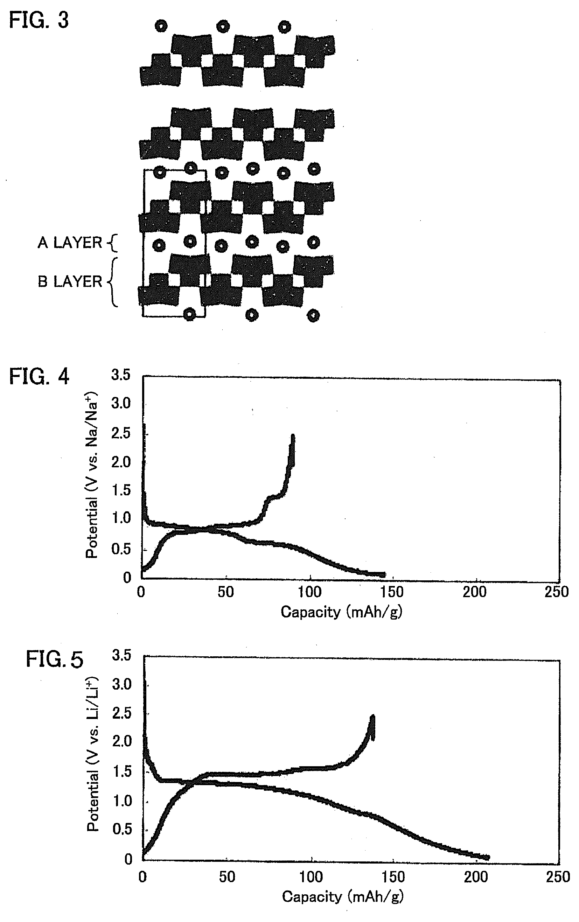

X-ray diffraction (XRD) measurement by using a CuKα ray was performed for the active material obtained in Example 1. The results are shown in FIG. 2. As shown in FIG. 2, the pattern of the active material corresponded nearly to the pattern of a KNb₃O₈ phase. Thus, it was confirmed that the active material obtained in Example 1 contained the KNb₃O₈ phase as the main body. The typical peaks of the KNb₃O₈ phase appeared in 2θ = 8.35°, 12.99°, 16.75°, 19.50°, 23.78°, 26.14°, 26.63°, 28.48°, 31.21°, 31.62°, 32.22°, and 33.86°. Incidentally, FIG. 3 is a schematic view showing a crystal structure of the KNb₃O₈ phase (orthorhombic crystal, space group Amam). As shown in FIG. 3, the KNb₃O₈ phase has a layer structure in which an A layer comprising K and a B layer containing an NbO₆ octahedron were laminated.

### (Charge and discharge test)

An evaluation battery using the active material obtained in Example 1 was produced. First, the obtained active material, a conductive material (acetylene black), and a binder (polyvinylidene fluoride, PVDF) were mixed and kneaded at a weight ratio of active material : conductive material : binder = 85 : 10 : 5 to thereby obtain a paste. Next, the obtained paste was coated on a copper foil by a doctor blade, dried and pressed to thereby obtain a test electrode with a thickness of 20 µm.

Thereafter, a CR2032-type coin cell was used, the test electrode was used as a working electrode, metallic Na was used as a counter electrode, and a porous separator of polyethylene/polypropylene/polyethylene (a thickness of 25 µm) was used as a separator. A solution such that NaPF₆ was dissolved at a concentration of 1 mol/L in a solvent, in which EC (ethylene carbonate) and DEC (diethyl carbonate) were mixed by the same volume, was used for a liquid electrolyte.

Next, a charge and discharge test was performed for the obtained evaluation battery. Specifically, the test was performed on the conditions of an environmental temperature of 25°C and a voltage range of 0.1 V to 2.5 V. The electric current value was determined at 3 mA/g. The results are shown in FIG. 4.

As shown in FIG. 4, it was confirmed that a definite plateau appeared in the vicinity of 0.9 V (vs Na/Na⁺) during desorption of Na to obtain 89 mAh/g (corresponding to 1.5 Na⁺) as reversible capacitance. Thus, it may be confirmed that the active material comprising the KNb₃O₈ phase (orthorhombic crystal, space group Amam) is useful as an anode active material for a sodium ion battery. In particular, this active material acts so stably in the vicinity of 1 V (vs Na/Na⁺) as to allow safety of the battery to be improved.

Incidentally, an evaluation battery (supporting electrolyte: LiPF₆ = 1 mol/L, solvent: EC/DMC/EMC = 3/4/3) was produced in the same manner as the above by using metallic Li as a counter electrode to perform a charge and discharge test in the same manner as the above. The results are shown in FIG. 5. As shown in FIG. 5, it was confirmed that a definite plateau appeared in the vicinity of 1.5 V (vs Li/Li⁺) during desorption of Li to obtain 137 mAh/g (corresponding to 2.3 Li⁺) as reversible capacitance. Thus, the present invention may also provide an anode active material for a lithium battery comprising the MNb₃O₈ phase described above, and a lithium ion battery using it.

### [Example 2]

An active material was obtained in the same manner as Example 1 except for using TiO₂, K₂CO₃ and Nb₂O₅ as raw materials at a molar ratio of TiO₂ : K₂CO₃ : Nb₂O₅ = 0.01 : 0.995 : 3. The composition of the obtained active material corresponds to x = 0.005 in K(Nb₃₋ₓTiₓ)O₈.

### [Example 3]

An active material was obtained in the same manner as Example 1 except for using TiO₂, K₂CO₃ and Nb₂O₅ as raw materials at a molar ratio of TiO₂ : K₂CO₃ : Nb₂O₅ = 0.02 : 0.99 : 3. The composition of the obtained active material corresponds to x = 0.01 in K(Nb₃₋ₓTiₓ)O₈.

### [Example 4]

An active material was obtained in the same manner as Example 1 except for using TiO₂, K₂CO₃ and Nb₂O₅ as raw materials at a molar ratio of TiO₂ : K₂CO₃ : Nb₂O₅ = 0.04 : 0.98 : 3. The composition of the obtained active material corresponds to x = 0.02 in K(Nb₃₋ₓTiₓ)O₈.

### [Example 5]

An active material was obtained in the same manner as Example 1 except for using TiO₂, K₂CO₃ and Nb₂O₅ as raw materials at a molar ratio of TiO₂ : K₂CO₃ : Nb₂O₅ = 0.06 : 0.97 : 3. The composition of the obtained active material corresponds to x = 0.03 in K(Nb₃₋ₓTiₓ)O₈.

### [Example 6]

An active material was obtained in the same manner as Example 1 except for using TiO₂, K₂CO₃ and Nb₂O₅ as raw materials at a molar ratio of TiO₂ : K₂CO₃ : Nb₂O₅ = 0.1 : 0.95 : 3. The composition of the obtained active material corresponds to x = 0.05 in K(Nb₃₋ₓTiₓ)O₈.

### [Example 7]

An active material was obtained in the same manner as Example 1 except for using TiO₂, K₂CO₃ and Nb₂O₅ as raw materials at a molar ratio of TiO₂ : K₂CO₃ : Nb₂O₅ = 0.2 : 0.9 : 3. The composition of the obtained active material corresponds to x = 0.1 in K(Nb₃₋ₓTiₓ)O₈.

### [Evaluations]

### (X-ray diffraction measurement)

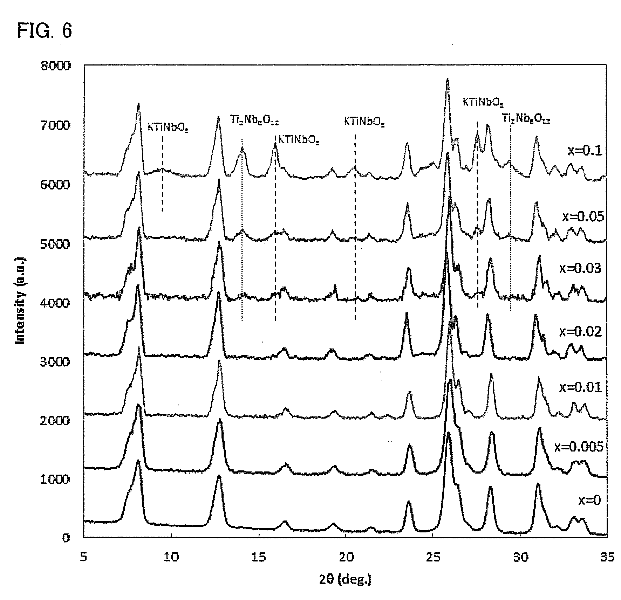

X-ray diffraction (XRD) measurement by using a CuKα ray was performed for the active materials each obtained in Examples 2 to 7. The results are shown in FIG. 6. As shown in FIG. 6, in Examples 2 to 7, the same peak as the KNb₃O₈ phase in Example 1 was obtained. Thus, in Examples 2 to 7, it was suggested that the K(Nb₃₋ₓTiₓ)O₈ phase was obtained. Also, an impurity phase (KTiNbO₅, Ti₂Nb₆O₁₂) was confirmed in Examples 5 to 7, but an impurity phase was not confirmed in Examples 2 to 4. This fact suggested that too large Ti added amount brought an impurity phase without allowing a solid solution such as to substitute with Nb.

### (Charge and discharge test)

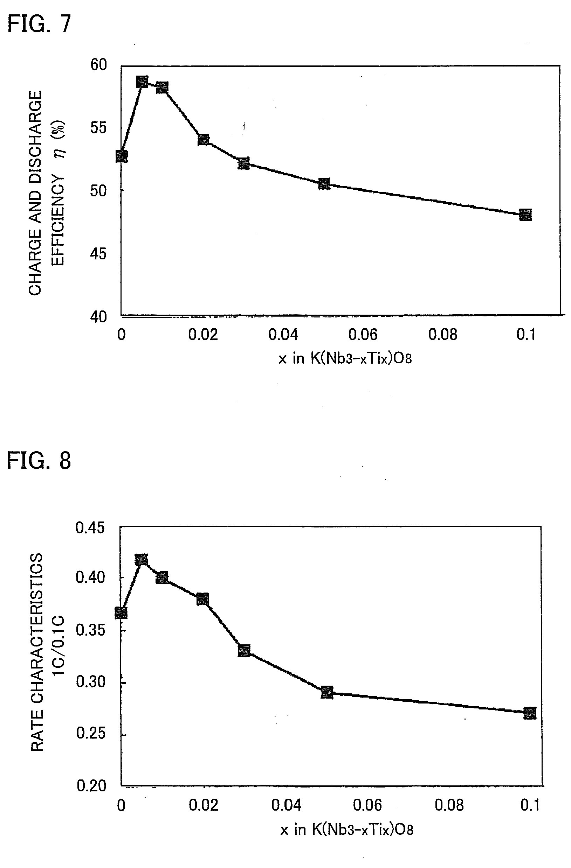

An evaluation battery (a sodium ion battery) was produced in the same manner as the above by using each of the active material obtained in Examples 1 to 7. Next, a charge and discharge test was performed for the obtained evaluation battery. Specifically, charge and discharge were performed on the conditions of an environmental temperature of 25°C, a voltage range of 10 mV to 2.5 V and an electric current value of 3 mA/g. The charge and discharge efficiency η (%) was calculated from the ratio between Na insertion capacity and Na desorption capacity in the first cycle. Also, the rate characteristics (1 C/0.1 C) were evaluated from the ratio between Na desorption capacity during charge and discharge at an electric current value of 150 mA/g and Na desorption capacity during charge and discharge at an electric current value of 15 mA/g. The results of the charge and discharge efficiency and the rate characteristics evaluation are shown in FIGS. 7 and 8 and Table 1.

**[Table 1]**

| | TiSUBSTITUTED AMOUNT x | IMPURITY PHASE | CHARGE AND DISCHARGE EFFICIENCY *η* (%) | RATE CHARACTERISTICS 1C/0.1C |
|---|---|---|---|---|
| EXAMPLE 1 | 0 | ABSENT | 52.7 | 0.37 |
| EXAMPLE 2 | 0.005 | ABSENT | 58.6 | 0.42 |
| EXAMPLE 3 | 0.01 | ABSENT | 58.1 | 0.40 |
| EXAMPLE 4 | 0.02 | ABSENT | 54.0 | 0.38 |
| EXAMPLE 5 | 0.03 | PRESENT | 52.1 | 0.33 |
| EXAMPLE 6 | 0.05 | PRESENT | 50.5 | 0.29 |
| EXAMPLE 7 | 0.1 | PRESENT | 47.9 | 0.27 |

As shown in FIGS. 7 and 8 and Table 1, in Examples 2 to 4, the charge and discharge efficiency and the rate characteristics improved as compared with Example 1. The reason therefor is guessed to be that the substitution of part of pentavalent Nb (Nb⁵⁺) with tetravalent Ti (Ti⁴⁺) with different valence number improved electron conduction. On the other hand, in Examples 5 to 7, the charge and discharge efficiency and the rate characteristics were equal to or less than Example 1. The reason therefor is guessed to be that the presence of an impurity phase deteriorated electron conduction and ion conductivity. Thus, it may be confirmed that the substitution of Nb with another element with different valence number improved at least one of the charge and discharge efficiency and the rate characteristics.

### [Example 8]

Weighed as raw materials were KNO₃ and Nb₂O₅ at a molar ratio of KNO₃ : Nb₂O₅ = 2 : 3, and kneaded in ethanol. Thereafter, the solution was molded into pellets, which were burned in a muffle furnace on the conditions of 600°C and 2 hours. Thereafter, the pellets were further ground and molded, and burned again in a muffle furnace on the conditions of 700°C and 19 hours. Thus, an active material having a composition of KNb₃O₈ was obtained.

### [Example 9]

The active material obtained in Example 8 was stirred in 7 M-HNO₃ solution at room temperature for 3 days to ion-exchange the K ion for the H ion and then obtain an active material having a composition of HNb₃O₈.

### [Example 10]

The active material obtained in Example 9 was stirred in 0.1 M-NaOH solution on the conditions of room temperature for 12 hours to ion-exchange the H ion for the Na ion and then obtain an active material having a composition of NaNb₃O₈.

### [Example 11]

The active material obtained in Example 9 was stirred in 1 M-LiOH solution on the conditions of room temperature for 3 days to ion-exchange the H ion for the Li ion and then obtain an active material having a composition of LiNb₃O₈.

### [Comparative Example 1]

Weighed as raw materials were Li₂CO₃ and Nb₂O₅ at a molar ratio of Li₂CO₃ : Nb₂O₅ = 1 : 3, and kneaded in ethanol. Thereafter, the solution was molded into pellets, which were burned in a muffle furnace on the conditions of 800°C and 40 hours. Thereafter, the pellets were further ground and molded, and burned again in a muffle furnace on the conditions of 800°C and 40 hours. Thus, an active material having a composition of LiNb₃O₈ was obtained.

### (X-ray diffraction measurement)

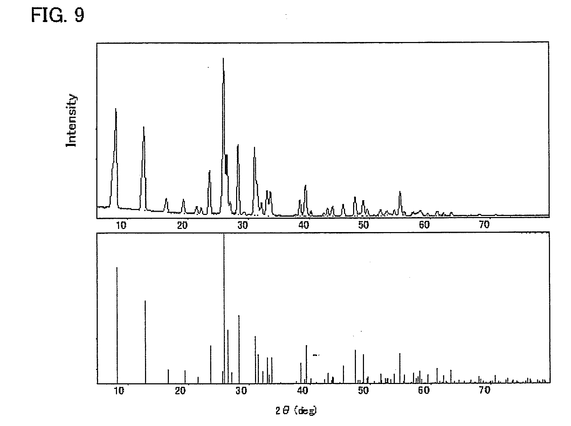

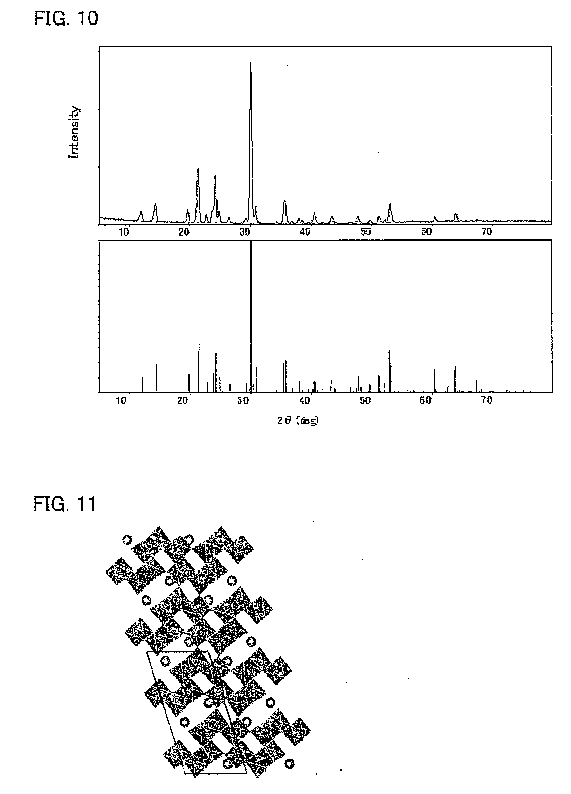

X-ray diffraction (XRD) measurement by using a CuKα ray was performed for the active material obtained in Example 8. The results are shown in FIG. 9. As shown in FIG. 9, in Example 8, a peak of the KNb₃O₈ phase was obtained similarly to Example 1. Incidentally, in Examples 9 to 11, ion exchange is performed by using the active material obtained in Example 8, so that a crystal structure is maintained. Also, X-ray diffraction (XRD) measurement by using a CuKα ray was performed for the active material obtained in Comparative Example 1. The results are shown in FIG. 10. As shown in FIG. 10, in Comparative Example 1, a peak of the LiNb₃O₈ phase (monoclinic crystal) was obtained. Incidentally, FIG. 11 is a schematic view showing a crystal structure of the LiNb₃O₈ phase (monoclinic crystal, space group P21/a). Thus, the LiNb₃O₈ phase (monoclinic crystal) and the KNb₃O₈ phase (orthorhombic crystal) are completely different crystal phases.

### (Charge and discharge test)

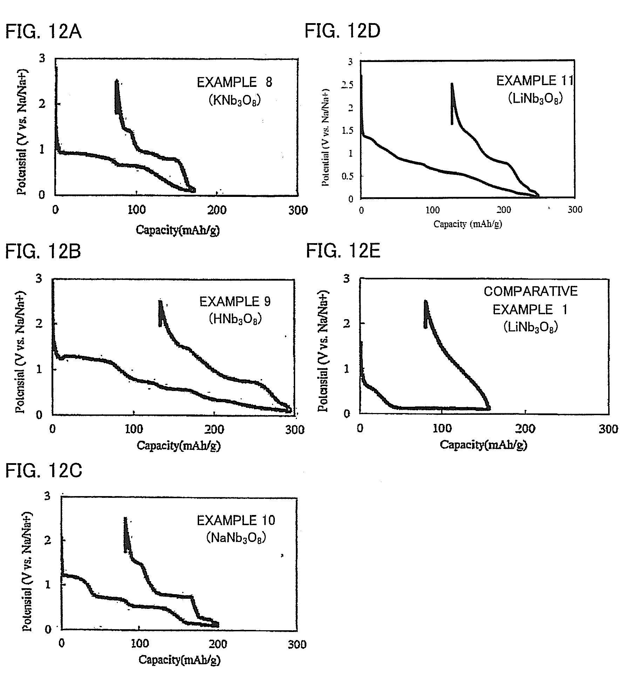

An evaluation battery (a sodium ion battery) was produced in the same manner as the above by using the active material obtained in Examples 8 to 11 and Comparative Example 1. Next, a charge and discharge test was performed for the obtained evaluation battery. Specifically, charge and discharge were performed on the conditions of an environmental temperature of 25°C, a voltage range of 0.1 V to 2.5 V and an electric current value of 3 mA/g. The results are shown in FIGS. 12A to 12E and Table 2.

**[Table 2]**

| | ACTIVE MATERIAL | CRYSTAL SYSTEM | Na INSERTION CAPACITY (m Ah/g) | Na DESORPTION CAPACITY (m Ah/g) |
|---|---|---|---|---|
| EXAMPLE 8 | KNb₃O₈ | ORTHORHOMBIC CRYSTAL | 172 | 96 |
| EXAMPLE 9 | HNb₃0₈ | ORTHORHOMBIC CRYSTAL | 295 | 162 |
| EXAMPLE 10 | NaNb₃O₈ | ORTHORHOMBIC CRYSTAL | 200 | 117 |
| EXAMPLE 11 | LNb₃O₈ | ORTHORHOMBIC CRYSTAL | 249 | 121 |
| COMPARATIVE EXAMPLE 1 | LNb₃O₈ | MONOCLINIC CRYSTAL | 156 | 75 |

As shown in FIGS. 12A to 12E, in Examples 8 to 11, a definite plateau appeared in the vicinity of 1 V (vs Na/Na⁺). On the contrary, in Comparative Example 1, a plateau was not observed in the vicinity of 1 V (vs Na/Na⁺), and a reaction potential appeared in the vicinity of 0.1 V (vs Na/Na⁺). The reason therefor is guessed to be that in Comparative Example 1, a crystal system is a monoclinic crystal, so that an insertion reaction of Na ion does not proceed but a conversion reaction is caused instead. Thus, it may be confirmed that the MNb₃O₈ phase belonging to an orthorhombic crystal allowed the active material with high electric potential.

Also, as shown in Table 2, in Examples 9 to 11, Na insertion capacity and Na desorption capacity improved as compared with Example 8. The reason therefor is guessed to be that the replacement of K ion with an ion smaller in ionic radius allowed a void, into which the Na ion can be inserted, to be formed. Thus, it may be confirmed that the replacement of K ion with an ion smaller in ionic radius improved at least one of Na insertion capacity and Na desorption capacity.

### Reference Signs List

- 1: cathode active material layer
- 2: anode active material layer
- 3: electrolyte layer
- 4: cathode current collector
- 5: anode current collector
- 6: battery case
- 10: sodium ion battery

## Claims

1. An anode active material for a sodium ion battery comprising an MNb₃O₈ phase (M is at least one kind of H, Li, Na and K) belonging to an orthorhombic crystal.

2. The anode active material for a sodium ion battery according to claim 1, **characterized in that** a part of Nb in the MNb₃O₈ phase is substituted with another metallic element Me.

3. The anode active material for a sodium ion battery according to claim 2, **characterized in that** valence number of the metallic element Me is divalence, trivalence or tetravalence.

4. The anode active material for a sodium ion battery according to claim 2 or 3, **characterized in that** the metallic element Me is Ti; and
"x" in M(Nb₃₋ₓTiₓ)O₈ satisfies 0.005 ≦ x ≦ 0.02.

5. The anode active material for a sodium ion battery according to any of claims 1 to 4, **characterized in that** the M has at least one kind of H, Li and Na.

6. A sodium ion battery comprising a cathode active material layer containing a cathode active material, an anode active material layer containing an anode active material and an electrolyte layer formed between the cathode active material layer and the anode active material layer;
**characterized in that** the anode active material is the anode active material for a sodium ion battery according to any of claims 1 to 5.
